# EUROPEAN PATENT APPLICATION

(11) **EP 3 633 920 A1**
(43) Date of publication of application: **08.04.2020**
(21) Application number: 18865925.4
(22) Date of filing: 09.10.2018
(51) Int. Cl.: H04L 12/24

(54) **METHOD AND DEVICE FOR AUTOMATICALLY MANAGING VIRTUALIZED FLOW MIRRORING POLICY, AND STORAGE MEDIUM**

(30) Priority: 09.10.2017 CN 201710941198
(71) Applicant: ZTE Corporation, Shenzhen, Guangdong 518057 (CN)
(72) Inventor: LIU, Chengzhi, Shenzhen Guangdong 518057 (CN)
(74) Representative: Baudler, Ron
(86) International application number: PCT/CN2018/109469
(87) International publication number: WO 2019/072165

(57) **Abstract**

The present disclosure provides a method for automatically managing a virtualized flow mirroring policy. The method includes following steps: configuring flow mirroring policy information in a Network Function Virtualization Orchestrator, NFVO, according to a received instruction; creating a flow mirroring policy according to the flow mirroring policy information, and deploying the flow mirroring policy to a Virtual Network Function, VNF; and monitoring the VNF according to the flow mirroring policy, and executing a corresponding management operation in response to a preset operation being monitored. The present disclosure further provides a device for automatically managing a virtualized flow mirroring policy and a computer readable storage medium.

## Description

### CROSS-REFERENCE TO RELATED APPLICATION

The present application claims the priority of Chinese Patent Application No.201710941198.7, filed on October 9, 2017, and entitled "method and device for automatically managing a virtualized flow mirroring policy, and medium", the contents of which are incorporated herein in their entirety by reference.

### TECHNICAL FIELD

The present disclosure relates to, but is not limited to, the field of communications, and in particular, to a method and a device for automatically managing a virtualized flow mirroring policy, and a computer-readable storage medium.

### BACKGROUND

In virtualized Evolved Packet Core (vEPC) network and Network Function Virtualization (NFV)/Software Defined Network (SDN) scenarios, in order to meet needs of operators for analysis of user signaling, as well as needs of big data analysis for customers' own business development and network optimization requirements, a mirroring function needs to be provided for on-Network flow, and the maximum flow capable of being mirrored needs to reach 100Gbps. However, an NFV/SDN-based flow mirroring function is to provide a mirroring policy configuration function at a Network Function Virtualization Infrastructure (NFVI) layer, and after a flow mirroring policy of a virtual machine is configured, the flow mirroring policy cannot be automatically matched and validated following lifecycle operations of the virtual machine, such as an automatic elasticity of the virtual machine, a migration of the virtual machine and a regeneration of the virtual machine, and a further manual intervention is required for the flow mirroring policy to take effect.

### SUMMARY

The disclosure provides a method for automatically managing virtualized flow mirroring policy, which includes: configuring flow mirroring policy information in a Network Function Virtualization Orchestrator (NFVO) according to a received instruction; creating a flow mirroring policy according to the flow mirroring policy information, and deploying the flow mirroring policy to a Virtual Network Function (VNF); and monitoring the VNF according to the flow mirroring policy, and executing a corresponding management operation in response to a preset operation being monitored.

The present disclosure further provides a device for automatically managing virtualized flow mirroring policy, which includes a processor, a network interface, a user interface, and a memory, a program for automatically managing virtualized flow mirroring policy is stored in the memory, and the processor is configured to execute the program to implement following steps: configuring flow mirroring policy information in a Network Function Virtualization Orchestrator (NFVO) according to a received instruction; creating a flow mirroring policy according to the flow mirroring policy information, and deploying the flow mirroring policy to a Virtual Network Function (VNF); and monitoring the VNF according to the flow mirroring policy, and executing a corresponding management operation in response to a preset operation being monitored.

The present disclosure further provides a computer readable storage medium in which a program for automatically managing virtualized flow mirroring policy is stored, the method for automatically managing virtualized flow mirroring policy as described above is implemented in response to the program being executed by a computer.

### BRIEF DESCRIPTION OF THE DRAWINGS

Fig. 1 is a flowchart of a method for automatically managing virtualized flow mirroring policy according to an embodiment of the present disclosure;
Fig. 2 is a flowchart illustrating that a corresponding management operation is executed in response to a preset operation being monitored in a method for automatically managing virtualized flow mirroring policy according to an embodiment of the present disclosure;
Fig. 3 is a flowchart illustrating that a corresponding management operation is executed in response to a preset operation being monitored in a method for automatically managing virtualized flow mirroring policy according to an embodiment of the present disclosure; and
Fig. 4 is a schematic structural diagram of a device for automatically managing virtualized flow mirroring policy according to an embodiment of the present disclosure.

### DETAILED DESCRIPTION

Implementations, functional features and advantages of technical solutions of the present disclosure will become clear from following further descriptions with reference to accompanying drawings and embodiments.

It should be understood that specific embodiments described below are merely illustrative of the present disclosure and do not limit the present disclosure.

An embodiment of the present disclosure provides a method for automatically managing virtualized flow mirroring policy, which includes: first, configuring flow mirroring policy information in a Network Function Virtualization Orchestrator (NFVO) according to a received instruction; then creating a flow mirroring policy according to the flow mirroring policy information, and deploying the flow mirroring policy to a Virtual Network Function (VNF); then monitoring the VNF according to the flow mirroring policy, and executing a corresponding management operation in response to a preset operation being monitored, that is, the flow mirroring policy can be automatically associated and take effect along with a change of lifecycle of a virtual machine without any manual intervention.

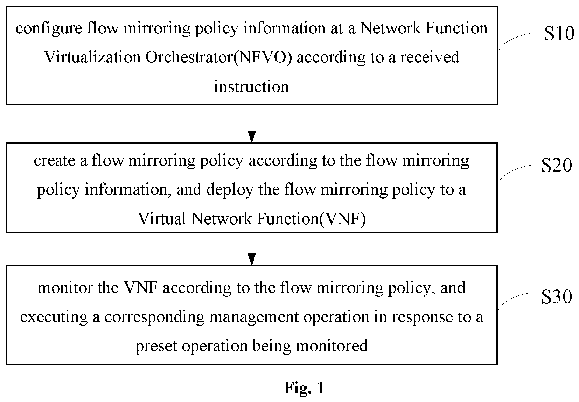

Fig. 1 is a flowchart of a method for automatically managing virtualized flow mirroring policy according to an embodiment of the present disclosure. As shown in Fig. 1, the method for automatically managing virtualized flow mirroring policy according the embodiment of the present disclosure may include following steps S10 through S30.

Step S 10, configuring flow mirroring policy information at a Network Function Virtualization Orchestrator (NFVO) according to a received instruction.

In the embodiment, the lifecycle of the virtual machine is managed by the NFVO, and therefore, the flow mirroring policy information is first configured in the Network Function Virtualization Orchestrator (NFVO). Objects to be configured include a flow mirroring source and relevant configurations, and a flow mirroring destination port and relevant configurations. The policy information includes: a flow mirroring policy source object which includes source cloud host information, a source cloud host port, a flow direction type and description information; a flow mirroring policy destination object which includes a destination port type, a switch ID, a switch port ID and a network name; a flow mirroring policy rule object which includes a source IP network segment, a destination IP network segment, an IP protocol type, parameters of a transmission layer source port and a transmission layer destination port.

Step S20, creating a flow mirroring policy according to the flow mirroring policy information, and deploying the flow mirroring policy to a Virtual Network Function (VNF).

After configuring the flow mirroring policy information, a flow mirroring policy may be created according to the flow mirroring policy information and deployed to a Virtual Network Function (VNF). For example, the Network Function Virtualization Orchestrator (NFVO) queries information of a virtual machine corresponding to the VNF where the flow mirroring source is located, and converts the flow mirroring source object into a Tapflow object; the Network Function Virtualization Orchestrator (NFVO) queries information of the flow mirroring destination port, and converts the flow mirroring destination port object into a TapService object; the Network Function Virtualization Orchestrator (NFVO) converts the flow mirroring policy information object into a Flow Classifier object, and then assembles the Tapflow object, the TapService object, and the Flow Classifier object into a flow mirroring policy object and issues the flow mirroring policy object to a Virtualized Infrastructure Manager (VIM); the VIM transmits the flow mirroring policy object issued by the Network Function Virtualization Orchestrator (NFVO) to a SDN network controller; the SDN network controller utilizes a capability of the SDN for automatically deploying and issuing a mirrored flow table to establish a Virtual eXtensible Local Area Network (VXLAN) tunnel between a mirroring source point and a mirroring destination port, issues a flow mirroring filtering rule to the mirroring source point, and issues a flow mirroring message forwarding rule to a flow mirroring gateway. That is, the flow mirroring policy is first created, and then the flow mirroring policy is deployed to the Virtual Network Function (VNF) so as to subsequently monitor whether the virtual machine is migrated, deleted and the like.

Step S30, monitoring the VNF according to the flow mirroring policy, and executing a corresponding management operation in response to a preset operation being monitored.

After the flow mirroring policy is deployed to the Virtual Network Function (VNF), the VNF needs to be monitored in real time or at regular time according to the flow mirroring policy, and a corresponding management operation is executed in response to a preset operation being monitored. For example, after it is monitored that the virtual machine migrates, the flow mirroring policy is automatically migrated to a new virtual machine which is installed with an OVS (OpenvSwitch), and the flow mirroring policy on the OVS of original computing node is automatically cancelled; in response to monitoring that a Scale Out operation occurs in the VNF where the flow mirroring source is located, the flow mirroring policy is automatically associated, and a flow mirroring server will receive a GTP (GPRS Tunnel protocol) message defined by the policy of the new virtual machine; in response to monitoring that a Scale In operation occurs in the VNF where the flow mirroring source is located, the policy of the virtual machine at which the Scale In operation occurs will be suppressed, and the flow mirroring server will not receive the message defined by the policy of the virtual machine any more. After the flow mirroring policy is deleted, the mirroring source will not receive the message corresponding to the policy.

In the method for automatically managing virtualized flow mirroring policy in the embodiment, flow mirroring policy information is first configured in a Network Function Virtualization Orchestrator (NFVO) according to a received instruction, then a flow mirroring policy is created according to the flow mirroring policy information, the flow mirroring policy is deployed to a Virtual Network Function (VNF), then the VNF is monitored according to the flow mirroring policy, and in response to a preset operation being monitored, a corresponding management operation is executed. That is, the flow mirroring policy can be automatically associated (that is, matched) and validated along with a change of life cycle of a virtual machine (for example, automatic elasticity of the virtual machine, migration of the virtual machine, and regeneration of the virtual machine) without any manual intervention.

In some implementations, the method for automatically managing virtualized flow mirroring policy further includes: before step S30, performing security verification on the flow mirroring policy.

In the embodiment, the flow mirroring policy is securely verified before monitoring the VNF by at least one of hash, encrypted hash, or data signature, which is not limited. Further, in some implementations, a virtual machine flow mirroring may be securely verified. For example, a source of the virtual machine flow mirroring may be verified. By way of example, a verification for the source of the virtual machine flow mirroring may include: judging whether the virtual machine flow mirroring requested to be accessed by a virtual machine flow mirroring access request is a virtual machine flow mirroring from a trusted party or not, in response to the virtual machine flow mirroring being from the trusted party, monitoring the VNF according to the flow mirroring policy, and in response to the virtual machine flow mirroring being not from the trusted party, not allowing the VNF to be monitored according to the flow mirroring policy. The security of the virtual machine flow mirroring in the whole life cycle is ensured by performing security verification on the flow mirroring policy.

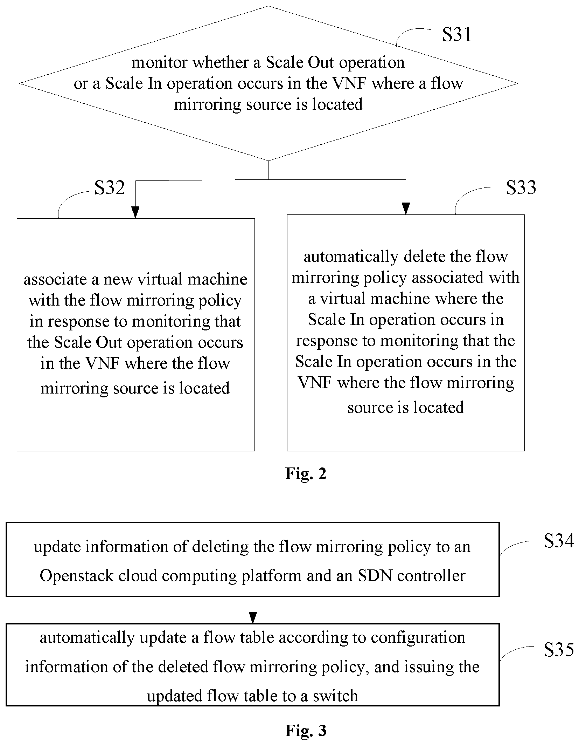

Fig. 2 is a flowchart illustrating that a corresponding management operation is executed in response to a preset operation being monitored in a method for automatically managing virtualized flow mirroring policy according to an embodiment of the present disclosure. That is, as shown in Fig. 2, the step S30 may include: step S31, monitoring whether a Scale Out operation or a Scale In operation occurs in the VNF where the flow mirroring source is located; step S32, in response to the Scale Out operation occurring in the VNF where the flow mirroring source is located, associating a new virtual machine with the flow mirroring policy; and step S33, in response to the Scale In operation occurring in the VNF where the flow mirroring source is located, automatically deleting the flow mirroring policy associated with the virtual machine in which the Scale In operation occurs.

In the embodiment, the preset operation may be an operation such as migration and deletion of the virtual machine, and therefore, in response to the Scale Out operation occurring in the VNF where the flow mirroring source is located, a new virtual machine is associated with the flow mirroring policy. For example, in response to the Network Function Virtualization Orchestrator (NFVO) monitoring that the Scale Out operation occurs in the VNF where the flow mirroring source is located, information of the new virtual machine is queried, where the information of the virtual machine includes a type of network element where the virtual machine is located, a type of the virtual machine and a port type of the virtual machine, then the NFVO automatically associates the new virtual machine with the configured flow mirroring policy and updates the associated flow mirroring policy to, for example, an Openstack cloud computing platform, the Openstack cloud computing platform automatically synchronizes flow mirroring update information to an SDN controller after receiving a message of NFVO synchronizing/updating the flow mirroring policy, and the SDN controller automatically updates a flow table according to configuration information of the flow mirroring policy, and issues the updated flow table to a switch, then the flow mirroring server can normally receive the GTP message of the new virtual machine and carry out service analysis on the message mirrored from the new virtual machine; in response to monitoring that the Scale In operation occurs in the VNF where the flow mirroring source is located, the flow mirroring policy associated with the virtual machine in which the Scale In operation occurs is automatically deleted, for example, the Network Function Virtualization Orchestrator (NFVO) automatically deletes the flow mirroring policy of the virtual machine in which the Scale In operation occurs in response to monitoring that the Scale In operation occurs in the VNF where the flow mirroring source is located.

Fig. 3 is a flowchart illustrating that a corresponding management operation is executed in response to monitoring a preset operation in a method for automatically managing virtualized flow mirroring policy according to an embodiment of the present disclosure. As shown in Fig. 3, the method for automatically managing virtualized flow mirroring policy further includes: step S34, updating information of deleting the flow mirroring policy to the Openstack cloud computing platform and the SDN controller after step S33; and step S35, automatically updating the flow table according to configuration information of the deleted flow mirroring policy, and issuing the updated flow table to the switch.

That is to say, after deleting the flow mirroring policy associated with the virtual machine in which the Scale In operation occurs, the information of deleting the flow mirroring policy may be further updated to the Openstack cloud computing platform, the Openstack cloud computing platform receives the message of deleting the flow mirroring policy from the NFVO, and then automatically updates the information of deleting the flow mirroring policy to the SDN controller, and the SDN controller automatically updates the flow table according to the configuration information of the deleted flow mirroring policy and issues the updated flow table to the switch, so that the flow mirroring policy of the virtual machine in which the Scale In operation occurs is suppressed, and the message defined by the policy of the virtual machine will not be received by the flow mirroring server.

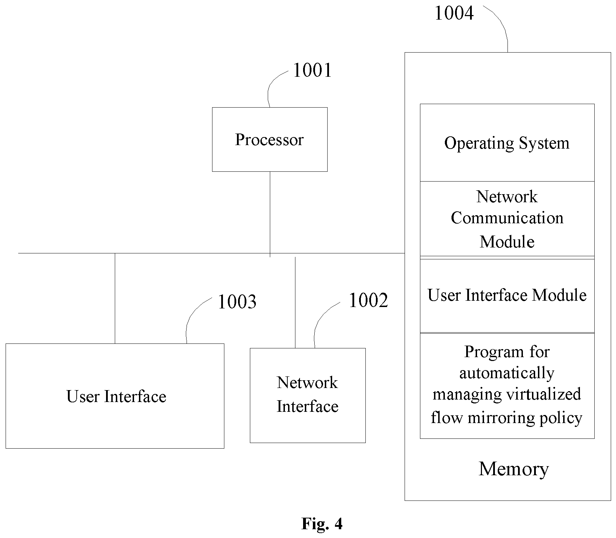

Fig. 4 is a schematic structural diagram of a device for automatically managing virtualized flow mirroring policy according to an embodiment of the present disclosure, where the device for automatically managing virtualized flow mirroring policy is a hardware operating environment of the method for automatically managing virtualized flow mirroring policy according to the embodiment of the present disclosure.

As shown in Fig. 4, the device for automatically managing virtualized flow mirroring policy may include: a processor 1001, e.g., a Central Processing Unit (CPU); a network interface 1002; a user interface 1003; and a memory 1004. Connections and communications between the processor 1001, the network interface 1002, the user interface 1003, and the memory 1004 may be realized by a communication bus. The network interface 1002 may include a standard wired interface (for connecting to a wired network), a wireless interface (such as a WI-FI interface, a bluetooth interface, an infrared interface, etc. for connecting to a wireless network). The user interface 1003 may include a display screen, an input element such as a keyboard. The user interface 1003 may also include a standard wired interface (e.g., for connecting a wired keyboard, a wired mouse, etc.) and/or a wireless interface (e.g., for connecting a wireless keyboard, a wireless mouse, etc.). The memory 1004 may be a highspeed RAM memory, or a non-volatile memory, such as a magnetic disk memory. The memory 1004 may also be a remote storage device independent of the processor 1001, for example, connectable and communicable with the processor 1001 through a network or the like.

In some implementations, the device for automatically managing virtualized flow mirroring policy may further include a camera, a Radio Frequency (RF) circuit, a sensor, an audio circuit, a WiFi module, and/or the like.

Those skilled in the art will appreciate that the configuration of the deice for automatically managing virtualized flow mirroring policy illustrated in Fig. 4 does not constitute a limitation on the device for automatically managing virtualized flow mirroring policy, and the device for automatically managing virtualized flow mirroring policy may include more or fewer components than those illustrated, or some of components illustrated may be combined or arranged in a different manner.

As shown in Fig. 4, the memory 1004, which is a computer readable storage medium, may include an operating system, a network communication module, a user interface module, and a program for automatically managing virtualized flow mirroring policy. The operating system may be a combination of hardware and software for managing and controlling the device for automatically managing virtualized flow mirroring policy, support operations of the network communication module, the user interface module, the program for automatically managing virtualized flow mirroring policy, and other software programs. The network communication module may be configured to manage and control the network interface 1002. The user interface module may be configured to manage and control the user interface 1003.

In the device for automatically managing virtualized flow mirroring policy illustrated in Fig. 4, the network interface 1002 may be connected to a database and in data communication with the database, the user interface 1003 may be connected to a client (which may be understood as a user terminal) and in data communication with the client, for example, display information for the client through a window or receive operation information sent by the client, and the processor 1001 may be configured to execute the program for automatically managing virtualized flow mirroring policy stored in the memory 1004 to implement following steps: configuring flow mirroring policy information at a Network Function Virtualization Orchestrator (NFVO) according to a received instruction; creating a flow mirroring policy according to the flow mirroring policy information, and deploying the flow mirroring policy to a Virtual Network Function (VNF); and monitoring the VNF according to the flow mirroring policy, and executing a corresponding management operation in response to a preset operation being monitored.

In some implementations, the processor 1001 is further configured to execute a program for automatically managing virtualized flow mirroring policy stored in the memory 1004 to implement a step of: performing security verification on the flow mirroring policy before monitoring the VNF

In some implementations, the processor 1001 is further configured to execute a program for automatically managing virtualized flow mirroring policy stored in the memory 1004 to implement steps of: monitoring whether a Scale Out operation or a Scale In operation occurs in the VNF where the flow mirroring source is located, associating a new virtual machine with the flow mirroring policy in response to the Scale Out operation occurring in the VNF where the flow mirroring source is located, and automatically deleting the flow mirroring policy associated with the virtual machine where the Scale In operation occurs in response to the Scale In operation occurs in the VNF where the flow mirroring source is located.

In some implementations, the processor 1001 is further configured to execute a program for automatically managing virtualized flow mirroring policy stored in the memory 1004 to implement steps of: updating the information of deleting the flow mirroring policy to an Openstack cloud computing platform and an SDN controller; and automatically updating the flow table according to the configuration information of the deleted flow mirroring policy, and issuing the updated flow table to the switch.

In some implementations, the processor 1001 is further configured to execute a program for automatically managing virtualized flow mirroring policy stored in the memory 1004 to implement steps of: configuring a flow mirroring policy source object which includes source cloud host information, a source cloud host port, a flow direction type and description information; configuring a flow mirroring policy destination object which includes a destination service port type, a switch ID, a switch port ID and a network name; and configuring a flow mirroring rule object which includes a source IP network segment, a destination IP network segment, an IP protocol type, parameters of a transmission layer source port and a transmission layer destination port.

An embodiment of the present disclosure further provides a computer readable storage medium storing one or more computer programs, the one or more computer programs being readable and executable by one or more computers to implement steps of: configuring flow mirroring policy information at a Network Function Virtualization Orchestrator (NFVO) according to a received instruction; creating a flow mirroring policy according to the flow mirroring policy information, and deploying the flow mirroring policy to a Virtual Network Function (VNF); and monitoring the VNF according to the flow mirroring policy, and executing a corresponding management operation in response to a preset operation being monitored.

In some implementations, the one or more computer programs are readable and executable by the one or more computers to perform a step of: performing security verification on the flow mirroring policy before monitoring the VNF

In some implementations, the one or more computer programs are readable and executable by the one or more computers to perform steps of: monitoring whether a Scale Out operation or a Scale In operation occurs in the VNF where the flow mirroring source is located; associating a new virtual machine with the flow mirroring policy in response to the Scale Out operation occurs in the VNF where the flow mirroring source is located, and automatically deleting the flow mirroring policy associated with the virtual machine where the Scale In operation occurs in response to the Scale In operation occurs in the VNF where the flow mirroring source is located.

In some implementations, the one or more computer programs are readable and executable by the one or more computers to perform steps of: updating the information of deleting the flow mirroring policy to an Openstack cloud computing platform and an SDN controller; and automatically updating the flow table according to the configuration information of the flow mirroring policy, and issuing the updated flow table to the switch.

In some implementations, the one or more computer programs are readable and executable by the one or more computers to perform steps of: configuring a flow mirroring policy source object which includes source cloud host information, a source cloud host port, a flow direction type and description information; configuring a flow mirroring policy destination object which includes a destination service port type, a switch ID, a switch port ID and a network name; and configuring a flow mirroring rule object which includes a source IP network segment, a destination IP network segment, an IP protocol type, parameters of a transmission layer source port and a transmission layer destination port.

It should be noted that terms "includes", "include" or any other variations thereof are intended to cover a non-exclusive inclusion, such that a process, method, product, or device that includes a list of elements does not include only those elements listed but may further include other elements not expressly listed or inherent to such process, method, product, or device. Without further limitation, a process, method, product, or device defined by the phrase "includes/include an/a ......" does not exclude an inclusion of additional elements other than those listed.

Through above descriptions of embodiments and implementations, it is clear to those skilled in the art that the method in the embodiment of the present disclosure may be implemented by software plus a general hardware platform, and may also be implemented by hardware only. Based on such understanding, the technical solutions of the present disclosure may be embodied in a form of a software product, which may be stored in a storage medium (such as ROM/RAM, magnetic disk, optical disk) and includes several instructions which, when executed, may enable a terminal device (such as a mobile phone, a computer, a server, an air conditioner, or a network device, etc.) to execute the method in the embodiment of the present disclosure.

The above embodiments are merely exemplary embodiments of the present disclosure, and do not limit the scope of the present disclosure, and equivalent structural changes or equivalent process changes based on contents of descriptions and drawings of the present disclosure, or direct or indirect applications of the technical solutions of the present disclosure to other related technical fields should be considered as falling into the scope of the present disclosure.

## Claims

1. A method for automatically managing virtualized flow mirroring policy, comprising steps of:
configuring flow mirroring policy information at a Network Function Virtualization Orchestrator, NFVO, according to a received instruction;
creating a flow mirroring policy according to the flow mirroring policy information, and deploying the flow mirroring policy to a Virtual Network Function, VNF; and
monitoring the VNF according to the flow mirroring policy, and executing a corresponding management operation in response to a preset operation being monitored.

2. The method of claim 1, further comprising:
performing security verification on the flow mirroring policy before monitoring the VNF

3. The method of claim 1, wherein executing the corresponding management operation in response to the preset operation being monitored comprises:
monitoring whether a Scale Out operation or a Scale In operation occurs in the VNF where a flow mirroring source is located;
associating a new virtual machine with the flow mirroring policy in response to monitoring that the Scale Out operation occurs in the VNF where the flow mirroring source is located; and
automatically deleting the flow mirroring policy associated with a virtual machine where the Scale In operation occurs in response to monitoring that the Scale In operation occurs in the VNF where the flow mirroring source is located.

4. The method of claim 3, further comprising:
after automatically deleting the flow mirroring policy associated with the virtual machine where the Scale In operation occurs, updating information of deleting the flow mirroring policy to an Openstack cloud computing platform and a Software Defined Network, SDN, controller; and
automatically updating a flow table according to configuration information of the deleted flow mirroring policy, and issuing the updated flow table to a switch.

5. The method of claim 1, wherein the flow mirroring policy information comprises:
a flow mirroring policy source object, the flow mirroring policy source object comprising source cloud host information, a source cloud host port, a flow direction type and description information;
a flow mirroring policy destination object, the flow mirroring policy destination object comprising a destination service port type, a switch ID, a switch port ID and a network name; and
a flow mirroring policy rule object, the flow mirroring policy rule object comprising a source IP network segment, a destination IP network segment, an IP protocol type, parameters of a transmission layer source port and a transmission layer destination port.

6. A device for automatically managing virtualized flow mirroring policy, comprising a processor, a network interface, a user interface, and a memory, the memory having a program for automatically managing virtualized flow mirroring policy stored therein, the processor being configured to execute the program to implement steps of:
configuring flow mirroring policy information at a Network Function Virtualization Orchestrator, NFVO, according to a received instruction;
creating a flow mirroring policy according to the flow mirroring policy information, and deploying the flow mirroring policy to a Virtual Network Function, VNF; and
monitoring the VNF according to the flow mirroring policy, and executing a corresponding management operation in response to a preset operation being monitored.

7. The device of claim 6, wherein the processor is further configured to execute the program to implement a step of:
performing security verification on the flow mirroring policy before monitoring the VNF

8. The device of claim 6, wherein the processor is further configured to execute the program to implement steps of:
monitoring whether a Scale Out operation or a Scale In operation occurs in the VNF where a flow mirroring source is located;
associating a new virtual machine with the flow mirroring policy in response to monitoring that the Scale Out operation occurs in the VNF where the flow mirroring source is located; and
automatically deleting the flow mirroring policy associated with a virtual machine where the Scale In operation occurs in response to monitoring that the Scale In operation occurs in the VNF where the flow mirroring source is located.

9. The device of claim 8, wherein the processor is further configured to execute the program to implement steps of:
updating information of deleting the flow mirroring policy to an Openstack cloud computing platform and a Software Defined Network, SDN, controller; and
automatically updating a flow table according to configuration information of the deleted flow mirroring policy, and issuing the updated flow table to a switch.

10. A computer readable storage medium, comprising a program for automatically managing virtualized flow mirroring policy stored thereon, when the program being executed by a computer, the method of any of claims 1 to 5 is implemented.
